# EUROPÄISCHE PATENTSCHRIFT

(11) **EP 1 991 445 B1**
(45) Veröffentlichungstag und Bekanntmachung des Hinweises auf die Patenterteilung: **29.07.2009**
(21) Anmeldenummer: 07710502.1
(22) Anmeldetag: 06.03.2007
(51) Int. Cl.: B60R 19/00, B62D 21/15, B60R 21/00

(54) **ABWEISVORRICHTUNG BEI TEILÜBERDECKTER FRONTALKOLLISION FÜR KRAFTFAHRZEUGE**
DEFLECTOR DEVICE FOR PARTIALLY OVERLAPPING FRONTAL COLLISION OF MOTOR VEHICLES
DISPOSITIF DÉFLECTEUR INTERVENANT AN CAS DE COLLISION FRONTALE À RECOUVREMENT PARTIEL POUR VÉHICULES AUTOMOBILES

(30) Priorität: 06.03.2006 AT 1652006 U
(43) Veröffentlichungstag der Anmeldung: 19.11.2008
(73) Patentinhaber: Magna Steyr Fahrzeugtechnik AG & Co. KG, 8041 Graz (AT)
(72) Erfinder: AUER, Thomas, D-85540 Haar (DE); SCHIMPL, Wolfgang, A-8020 Graz (AT); ORNIG, Adolf, A-8141 Unterpremstetten (AT)
(74) Vertreter: Harringer, Thomas
(86) Internationale Anmeldenummer: PCT/AT2007/000112
(87) Internationale Veröffentlichungsnummer: WO 2007/101285

(56) Entgegenhaltungen:
- EP-A2- 0 332 830
- WO-A-20/05110815
- JP-A- 2004 306 871

## Beschreibung

Die Erfindung betrifft eine Abweisvorrichtung bei teilüberdeckter Frontalkollision für Kraftfahrzeuge, Kraftfahrzeuge, deren Vorderwagen Träger aufweist, welche Abweisvorrichtung vor einem Vorderrad angeordnet und von einem im Wesentlichen horizontal und schräg rückwärts abstehenden mit einem Träger verbundenen Abweiser gebildet ist, der das Vorderrad im Kollisionsfall abschirmt. Unter einer teilüberdeckten Frontalkollision ist eine Frontalkollision zu verstehen, bei der die kollidierenden Fahrzeuge sich mit im wesentlichen parallelen, aber seitlich gegeneinander versetzten Richtungsvektoren aufeinander zu bewegen. Die Kollisionszone ist somit nur ein seitlicher Teil des Vorderwagens. Der Träger ist in der Regel ein Längsträger entweder des Fahrzeugrahmens oder des Fahrzeugkörpers oder eines Hilfsrahmens, er könnte aber auch ein Querträger sein.

Der seitliche Teil des Vorderwagens ist bei Fahrzeugen gewöhnlich weniger steif als der mittlere Teil vor der Fahrgastzelle und nimmt auch weniger Kollisionsenergie auf, sodass mehr Kollisionsenergie auf die Fahrgastzelle einwirkt. Es besteht insbesondere die Gefahr, dass das jeweilige Rad in den Passagierraum eindringt. Darüber hinaus tritt bei solchen Kollisionen in der Regel noch ein besonders gefährliches Phänomen auf: Bereits bei relativ kleiner Überdeckung verhaken sich die kollisionsseitigen Vorderräder der beiden Fahrzeuge ineinander; ein Rad zumindest des einen Fahrzeuges kollidiert mit der Radaufhängung des anderen und vice versa. Dadurch wirken nicht nur besonders starke Längskräfte auf die kollidierenden Fahrzeuge und auf deren Räder, die sie in den Passagierraum stoßen, sondern die beiden Fahrzeuge werden zumindest teilweise formschlüssig miteinander verbunden. Dadurch wird deren aneinander Vorbeigleiten verhindert. Zusätzlich wird den beiden ineinander verhakten Fahrzeugen noch gemeinsam ein Drall um die Hochachse erteilt, der die Kollisionsgegner aus der Fahrbahn schleudert.

Dieses Phänomen wird in der Literatur eben als "Verhaken" bezeichnet. Als Gegenmaßnahme ist es aus der DE 195 32 858 A1 bekannt, die vordere Stoßstange im Seitenbereich in Draufsicht stark gerundet und so steif auszubilden, dass diese eine Berührung der kollisionsseitigen Vorderräder verhindert und ein aneinander Abgleiten der beiden Fahrzeuge bewirkt. Man kann sich vorstellen, dass die Stoßstange bei den heute vorkommenden Kollisionsgeschwindigkeiten dazu nie stark genug sein kann. Außerdem hat die Stoßstange noch andere Sicherheitsanforderungen zu erfüllen, die dem zuwider laufen: Eine möglichst breite Kollisionsfläche bei ganz überdeckter Frontalkollision und dosiertes Nachgeben bei Kollision mit einem Fußgänger.

Aus der gattungsgemäßen WO 2005/110815 A1 ist eine Abweisvorrichtung bekannt, die dank ihrer Kinematik das hinter ihr befindliche Vorderrad umgreift und einwärts einschlagt und auch das kollidierende Vorderrad des Kollisionsgegners einwärts einschlagt. Damit wird einem Verhaken entgegengewirkt. Versuche haben allerdings gezeigt, dass wegen der bei höheren Kollisionsgeschwindigkeiten größeren Kräfte und auf Grund konstruktiver Erfordernisse des jeweiligen Fahrzeuges noch erhebliche Verbesserungen des Kollisionsverhaltens möglich sind.

Es ist somit Aufgabe der Erfindung, Wege zu solchen Verbesserungen aufzuzeigen. Erfindungsgemäß ist an dem Abweiser ein Abweisschuh in dessen Längsrichtung aus einer Ruhestellung in eine Wirkstellung verschiebbar geführt, wobei der Abweisschuh aus einem am oder im Abweiser geführten Schieber und aus einem von diesem nach vorne abstehenden Teil besteht. Dabei ist unter Ruhestellung der kollisionfreie Zustand und unter Wirkstellung die ganz nach aussen verschobene Stellung des Abweisschuhs im Kollisionsfall zu verstehen. Dadurch, dass der Abweiser schräg rückwärts vom Träger (in der Regel dem Längsträger) absteht, wird der Abweisschuh am Beginn der Kollision über die Kontur des dahinter befindlichen Vorderrades hinaus nach aussen geschoben. Der nach vorne abstehende Teil sorgt dafür, dass das geschieht, solange der Abweiser noch nicht verformt ist. Am verformten Abweiser wäre der Abweisschuh nicht mehr verschiebbar. Im weiteren Verlauf der Kollision verformt beziehungsweise verschiebt sich dann auch der Abweiser, wodurch der Abweisschuh das Vorderrad von aussen umgreift und es einwärts einschlagt.

Der Abweiser mit dem ausgefahrenen Abweisschuh wirkt aber auch auf den Kollisionsgegner ein: Durch seine Ausrichtung nach schräg rückwärts verschwenkt er auch das kollidierende Vorderrad des Kollisiorisgegners einwärts, wodurch die beiden Fahrzeuge aneinander abgleiten. Dabei sind die auf beide Fahrzeuge wirkenden Verzögerungskräfte wesentlich kleiner und die Querkomponente der Stoßkraft wird so weit abgebaut, dass die kollidierenden Fahrzeuge nur sehr wenig von ihrer Fahrtrichtung abgelenkt werden. Diese Wirkung tritt bereits ein, wenn der Kollisionsgegner nicht mit der erfindungsgemäßen Vorrichtung ausgerüstet ist. Umso mehr tritt sie ein, wenn auch er mit einem Abweiser ausgerüstet ist.

Um eine ausreichende schnelle und zuverlässige Verschiebung des Abweisschuhs zu erreichen, ist der Abweiser ein gerades Hohlprofil und er schließt mit dem Längsträger einen Winkel von 40 bis 70, vorzugsweise 45 bis 60 Winkelgraden ein. (Anspruch 2). So bleibt auch der Abweiser trotz seiner Führungsfunktion auch ausreichend steif.

In einer bevorzugten Ausführungsform befindet sich der Schieber des Abweisschuhs in seiner Ruhestellung ganz im Inneren des Abweisers und seine Wirkstellung ist durch einen Anschlag am Abweiser bestimmt (Anspruch 3). Dadurch kann der Abweisschuh im Kollisionsfall sehr weit, aber nicht zu weit, aus dem Abweiser herausgeschoben werden.

In der bevorzugten Ausführungsform ist weiters der Abweiser ein geschlossenes gerades Hohlprofil, in dessen Innerem der Schieber geführt ist, welches Hohlprofil an seiner von vorne sichtbaren Seite mindestens einen Schlitz aufweist, durch den hindurch der nach vorne abstehende Teil mit dem Schieber fest verbunden ist, wobei der Schlitz den Anschlag bildet (Anspruch 4).

Vorzugsweise ist der Abweiser mittels einer Strebe an einem Träger abgestützt, wobei die Strebe so dimensioniert und abgestützt ist, dass sie sich bei Erreichen einer bestimmten Stoßkraft verformt (Anspruch 5), also ausknickt oder staucht.

In einer möglichen Ausführungsform ist der vom Abweisschuh nach vorne abstehende Teil ein Absatz, dessen Verbindungsstelle mit dem Abweiser von dessen äusserem Ende nach der Fahrzeugmitte hin versetzt ist (Anspruch 6). Er ist etwa so weit nach innen versetzt, dass die Verbindungsstelle etwa vor dem Vorderrad ist. Dadurch wirkt bereits der Absatz auch auf das Vorderrad des Kollisionsgegners ein. Das insbesondere, wenn die Sohle des Absatzes so ausgerichtet ist, dass sie in Ruhestellung und am Beginn einer Kollision quer zur Fahrtrichtung steht. Vorzugsweise ist der Absatz stauchbar (Anspruch 7), damit im Kollisionsfall die Verformung des Schiebers hinausgezögert wird.

In einer anderen möglichen Ausführungsform ist der nach vorne abstehende Teil ein Bügel, der am äusseren Ende des Abweisers befestigt ist und sich bis ungefähr vor den Bereich des Vorderrades nach der Fahrzeugmitte hin erstreckt (Anspruch 8). So wird in einfacher Weise die Verformung des Schiebers hinausgezögert. Der Bügel kann aber auch mit dem Absatz nach Anspruch 6 kombiniert sein (Anspruch 9).

Eine weitere Möglichkeit besteht darin, den nach vorne abstehenden Teil des Abweisschuhs als Schubstange zu gestalten, der vorne an oder in der Frontverkleidung des Fahrzeuges endet (Anspruch 10). So reicht er weiter nach vorne und wird im Kollisionsfall noch früher ein Ausfahren des Abweisschuhs bewirken, wodurch für die Verschiebung des Abweisschuhs einige Hundertstel Sekunden gewonnen werden kann, und die Einleitung der zur Verschiebung führenden Stoßkraft günstiger ist. So bleibt die Verschiebung des Abweisschuhs auch unter ungünstigsten Bedingungen gewahrt.

Wenn die Frontverkleidung (beziehungsweise die Stoßstange) des Fahrzeuges von oben gesehen stark gerundet ist, ist die Schubstange vorzugsweise am Absatz des Abweisschuhs befestigt und ihr vorderes Ende ist der Fahrzeugmitte näher als der Absatz des Abweisschuhs (Anspruch 11).

Der Abweiser kann fest mit dem Längsträger des Fahrzeuges verbunden und gegebenenfalls mit einer Strebe an diesem abgestützt sein. Dann verformt er und die gegebenenfalls vorhandene Strebe sich bei fortschreitender Kollision. In einer weitergebildeten Ausführungsform ist der Abweiser Glied einer geschlossenen kinematischen Kette und er schwenkt dadurch bei Einwirkung eines frontalen Stoßes rückwärts und verlagert sich nach der Fahrzeugaussenseite hin (Anspruch 12). So wird im Kollisionsfall die Führung des Abweisschuhs und der Abweisschuh selbst nach aussen und auf das Vorderrad zu bewegt und umfasst dieses so noch weiter.

Dabei wird auch die Wirkung des Abweisschuhs auf das Vorderrad des Kollisionsgegners verstärkt. Dadurch kann der Abweiser kürzer ausgeführt sein, sodass er in Ruhestellung seitlich weniger weit auskragt. Das ist wegen des sehr beschränkten Raumangebots im Vorderwagen, und besonders bei Fahrzeugen mit Breitreifen, ein wesentlicher Vorteil. Ausserdem kann damit der Auslegung der Träger für vollüberdeckte Frontalkollisionen besser Rechnung getragen werden. Bei einer vollüberdeckten Frontalkollisionen nämlich sollen die zur Vergrößerung des Verformungsweges abknicken oder ziehharmonikaartig gestaucht werden.

Den beschränkten Raumverhältnissen im Vorderwagen ist besonders gut Rechnung getragen, wenn die kinematische Kette ein Schubkurbelgetriebe ist, das aus dem Abweiser, einem um ein erstes Lager am Träger schwenkbaren Schwingarm und aus einer Schwenkschiebeführung für den Abweiser besteht, wobei der Abweiser in einem Punkt zwischen seinem äusseren Ende und der Schiebeführung mit dem Schwingarm gelenkig verbunden ist (Anspruch 13). Die Schwenkschiebeführung erlaubt ein Verschwenken und ein Verschieben des Abweisers. Sie kann sehr verschieden gestaltet sein, beispielsweise durch Führung in einem Punkt, oder in zwei symmetrisch zur Bewegungsrichtung angeordneten Punkten. Die Schwenkschiebeführung kann aber auch mittels eines Schwenkzapfens als zweites Lager mit einem Träger (Längsträger oder Querträger) verbunden sein (Anspruch 14).

Im folgenden wird die Erfindung anhand von Abbildungen beschrieben und erläutert. Es stellen dar:
- Fig. 1: Die erfindungsgemäße Vorrichtung in einer ersten Ausführungsform,
- Fig. 2: Die erfindungsgemäße Vorrichtung in einer zweiten Ausführungsform,
- Fig. 3: Wie Fig.2, in axonometrischer Ansicht,
- Fig. 4: Die Wirkungseise der Vorrichtung gemäß Fig.2 in drei Stadien (a,b und c) einer Kollision.

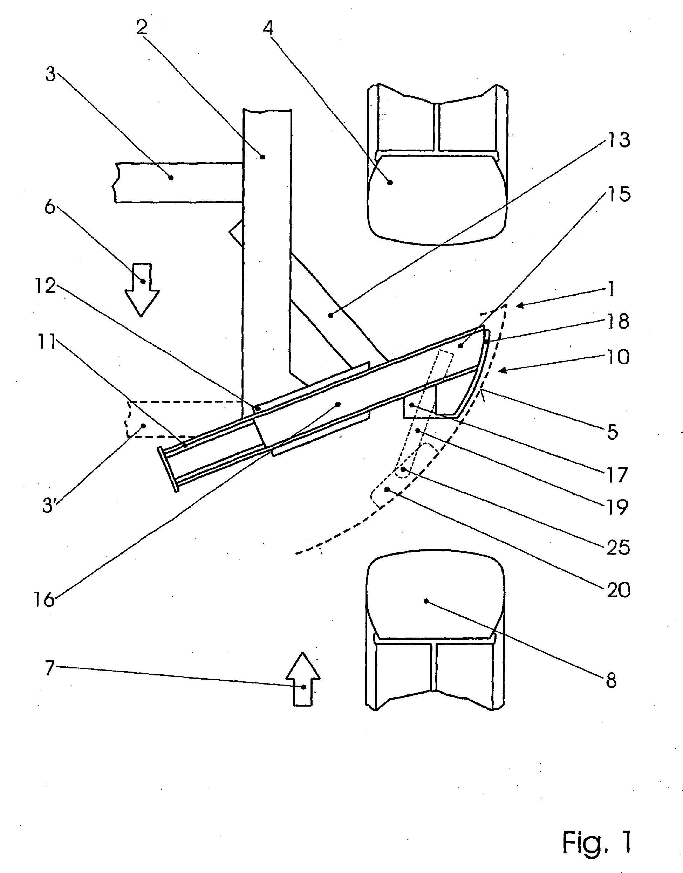

In **Fig.1** ist der Vorderwagen eines Kraftfahrzeuges 1 nur durch seinen linken Längsträger 2 mit einem daran anschließenden Querträger 3 bzw 3', durch sein linkes Vorderrad 4 und (strichliert) durch die Kontur einer Frontverkleidung 5 angedeutet. Die rechte Seite des Vorderwagens ist nicht zu sehen, obwohl in der Regel spiegelgleich ausgebildet. Ein Pfeil 6 gibt die Fahrtrichtung bei Vorwärtsfahrt an. Von einem eventuellen Kollisionsgegner ist nur dessen linkes Vorderrad 8 und dessen Bewegungsrichtung 7 eingezeichnet. Da das erfindungsgemäß ausgestattete Fahrzeug 1 bei einer nur teilüberdeckten Frontalkollision geschützt werden soll, bewegen sich die jeweils linken Vorderräder der beiden Fahrzeuge aufeinander zu.

Die erfindungsgemäße Abweisvorrichtung ist summarisch mit 10 bezeichnet. Sie besteht aus einem mittels einer Muffe 12 mit dem Längsträger 2 fest verbundenen Abweiser 11 und aus einer Strebe 13, die den Abweiser 11 in dieser Winkelstellung am Längsträger 2 abstützt. Die Abstützung muss nicht am Längsträger 2, sie könnte auch an einem Querträger oder einem anderen Fahrzeugfesten Teil sein. Der Abweiser 11 schließt mit dem Längsträger einen Winkel von 40 bis 70, vorzugsweise 45 bis 60 Winkelgraden ein und ist ein U-förmiges, oder besser, ein geschlossenes gerades Profil, in dem ein Abweisschuh 15 in Längsrichtung verschiebbar geführt ist.

Der Abweisschuh 15 besteht aus einem Schieber 16, der am oder im Abweiser 11 verschiebbar geführt ist und aus einem Absatz 17, welcher in Fahrtrichtung nach vorne vorspringt. Der Absatz 17 ist von dem Ende des Abweisschuhes 15 gegen die Fahrzeugmitte versetzt und hier mit einem Bügel 18 mit dem äußeren Ende des Abweisschuhes 15 verbunden. Unter Umständen kann mit dem Bügel ohne Absatz das Auslangen gefunden werden. Der Absatz 17 kann so ausgebildet sein, dass er ab einer bestimmten Stärke des auf ihn wirkenden Stoßes gestaucht oder geknittert wird. Weiters kann der Abweisschuh 15 eine an ihm befestigte Schubstange 19 (strichliert) haben, deren vorderes Ende 25 näher der Fahrzeugmitte ist und an der Kontur 5 der Innenverkleidung anliegt beziehungsweise einen mit der Kontur 5 bündigen Aufprallteil 20 aufweisen.

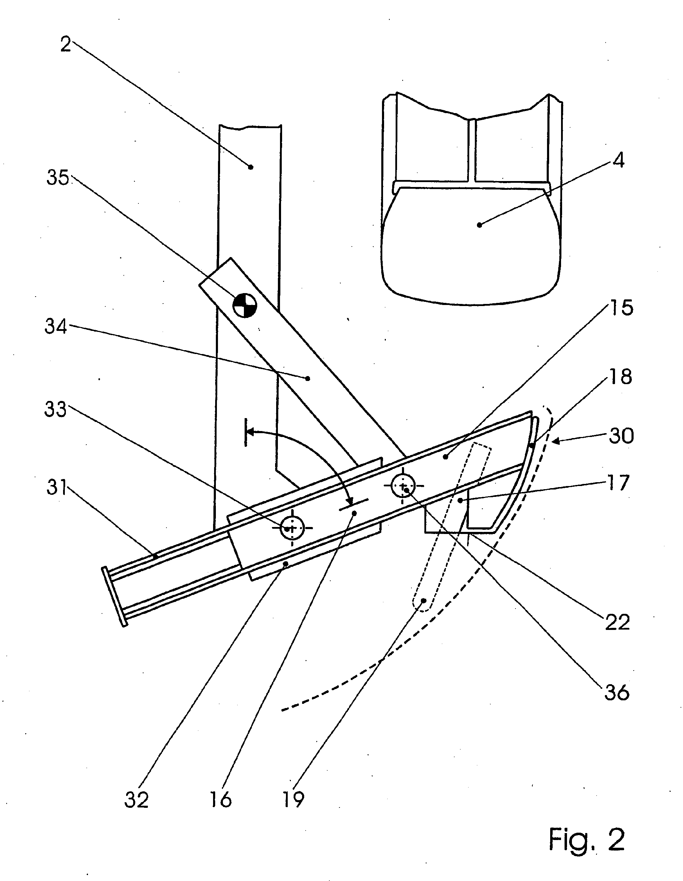

Die weitergebildete Ausführungsform der **Fig. 2** unterscheidet sich von der der Fig.1 dadurch, dass der Abweiser 31 einer allgemein mit 30 bezeichneten Abweisvorrichtung nicht fest mit dem Längsträger 2 verbunden, sondern in einer Führung 32 verschiebbar ist, welche hier in einem zweiten Lager (oder Schwenkbolzen) 33 schwenkbar mit dem Längsträger 2 verbunden ist. Es könnte aber auch eine an einem Träger befestigte Führung sein, die auch ein Verschwenken des Abweisers gestattet. Anstelle der Strebe der Fig.1 ist hier ein Schwingarm 34 angebracht, der in einem ersten Lager (oder Schwenkbolzen) 35 am Längsträger 2 angelenkt ist und in einem Drehpunkt 36 mit dem Abweiser 31 schwenkbar verbunden ist. Somit bilden hier der Längsträger 2, die Schwenkschiebeführung 32, der Abweiser 31 und der Schwingarm 34 eine geschlossene kinematische Kette, ein Schubkurbelgetriebe. Die geschlossene kinematische Kette könnte aber auch ein äquivalentes Gelenkviereck sein.

Die Glieder der kinematischen Kette sind so bemessen, dass im Falle einer Kollision nach Ausschieben des Abweisschuhs der Abweiser 31 nach außen verschoben und der Kontur des Rades 4 genähert wird. Diese Bewegung, die hier gemäß der kinematischen Kette erfolgt, geschieht in der einfacheren Ausführung der Fig.1 durch Verformung von Abweiser und Strebe. In dem Abweiser 31 ist wieder, so wie in der Ausführungsform der Fig.1, der Abweisschuh 15 verschiebbar geführt, so wie in der Fig.1, weshalb auch die selben Bezugszeichen gewählt sind.

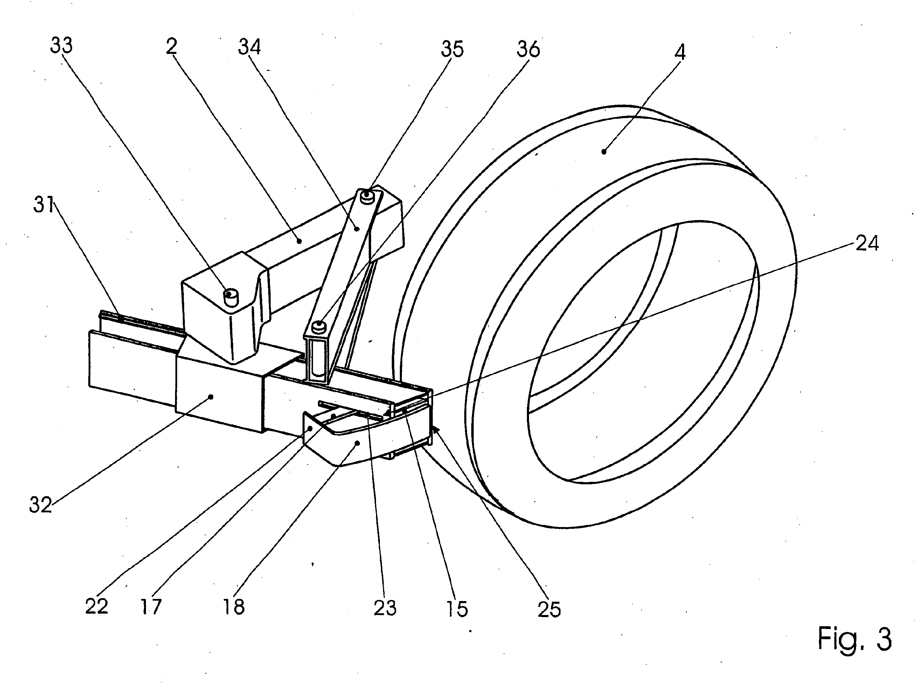

In **Fig. 3** ist die Vorrichtung der Fig.2 räumlich und anschaulicher dargestellt. Man sieht, dass die Führung des Abweisers 31 in dem hier als Schwenkbolzen ausgeführten Lager 33 schwenkbar ist und der Abweiser 31 in ihm verschiebbar. Der Abweiser 31 ist hier ein geschlossenes Profil, sodass der Schieber 16 des Abweiseschuhs 15 im Inneren des Abweisers 31 geführt ist. Der Absatz 17 des Abweisschuhs 15 ist durch einen oder mehrere Schlitze 23 aus dem Abweiser 31 herausgeführt. Die vorderen Begrenzungen der Schlitze bilden einen Anschlag 24, der die Auswärts-Bewegung des Abweisschuhs im Kollisionsfall begrenzt. Die Stirnfläche 22 des Absatzes 17 liegt in einer zur Längsrichtung des Fahrzeuges normalen Ebene und reicht als Bügel 18 zu dem äußeren Ende 25 des Abweisers 31.

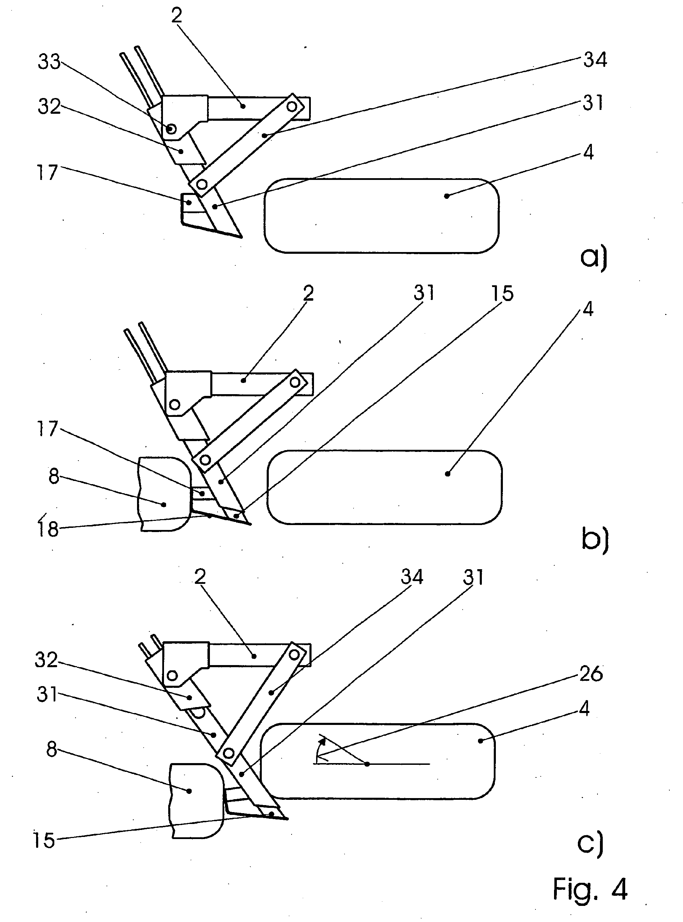

Anhand der **Fig . 4** wird nun die Wirkungsweise der erfindungsgemäßen Vorrichtung in drei Phasen einer Kollision erläutert. Fig. 4a ist der Zustand unmittelbar vor einer teilüberdeckten Frontalkollision. Die Vorrichtung befindet sich in Ruhestellung. In dieser ist der Schieber 16 des Abweisschuhs 15 ganz im Inneren des Abweisers 31. In Fig. 4b berührt das Rad des Kollisionsgegners eben den Absatz 17 des Abweisschuhs 15 und schiebt diesen nach außen bis zu dem Anschlag 24 (siehe Fig.3). In diesem Stadium könnte der Absatz 17 auch gestaucht werden (was nicht eingezeichnet ist), sodass der Abweiser 31 bereits das Rad 8 des Kollisionsgegners einwärts schwenkt.

In der nächsten Phase (Fig.4c) wird der gesamt Abweiser 31 als Teil der kinematischen Kette bewegt, beziehungsweise in der Ausführungform der Fig.1 verformt, gegebenenfalls mitsamt dem Träger. Der Abweiser 31 wird durch die von dem Reifen des Kollisionsgegners noch immer wirkende Kraft in seiner Führung 32 nach außen gezogen und gleichzeitig dem Rad 4 genähert. In dieser Stellung bewirkt der Abweiser 31 ein einwärts Schwenken des Rades 4, was durch einen Pfeil 26 angedeutet ist. Es ist zweckmäßig, die Berührungsfläche des Abweisers 31 mit dem Reifen des Rades 4 möglichst groß auszubilden, um die vom Rad auf den Abweiser ausgeübte vertikale Kraft möglichst klein zu halten. Alternativ könnte auch eine Radlaufschale mit geringem Reibwert vorgesehen sein.

Dieselbe einwärts schwenkende Wirkung übt der Abweiser 31 aber auch auf das Rad 8 des Kollisionsgegners aus. Auch dieses wird in demselben Drehsinn einwärts geschwenkt, wobei die beiden kollidierenden Räder aneinander abgleiten. Dadurch können sich die beiden kollidierenden Räder 4, 8 nicht nur nicht verhaken, sondern sie erlauben es den kollidierenden Fahrzeugen auch, aneinander vorbeizuschrammen, ohne dabei zum Stillstand zu kommen und ohne erheblich von der Fahrbahn abgedrängt zu werden.

Wenn auch die erfindungsgemäße Vorrichtung nur für ein Vorderrad beziehungsweise für eine Seite des Fahrzeuges beschrieben ist, so wird sie wohl auf beiden Seiten vorhanden sein. Sie wirkt ja nicht nur bei Kollision mit einem entgegenkommenden Fahrzeug, sondern auch bei Kollision mit einem Baum am Straßenrand.

## Patentansprüche

1. Abweisvorrichtung bei teilüberdeckter Frontalkollision für Kraftfahrzeuge, deren Vorderwagen Träger (2,3,3') aufweist, welche Abweisvorrichtung vor einem Vorderrad (4) angeordnet und von einem im Wesentlichen horizontal und schräg rückwärts abstehenden mit einem Träger verbundenen Abweiser gebildet ist, der das Vorderrad im Kollisionsfall abschirmt, wobei an dem Abweiser (11; 31) ein Abweisschuh (15) in dessen Längsrichtung aus einer Ruhestellung in eine Wirkstellung verschiebbar geführt ist, wobei der Abweisschuh (15) aus einem am oder im Abweiser (11; 31) geführten Schieber (16) besteht, **dadurch gekennzeichnet, daß** der Abweisschuh weiter aus einem von diesem nach vorne abstehenden Teil (17;18;19) besteht.

2. Abweisvorrichtung nach Anspruch 1, **dadurch gekennzeichnet, dass** der Abweiser (11;31) ein gerades Hohlprofil ist und mit einem Längsträger (2) einen Winkel von 40 bis 70, vorzugsweise 45 bis 60, Grad einschließt.

3. Abweisvorrichtung nach Anspruch 1, **dadurch gekennzeichnet, dass** sich der Schieber (16) des Abweisschuhs (15) in seiner Ruhestellung ganz im Inneren des Abweisers (11;31) befindet und seine Wirkstellung durch einen Anschlag (24) am Abweiser (11;31) bestimmt ist.

4. Abweisvorrichtung nach Anspruch 3, **dadurch gekennzeichnet, dass** der Abweiser (11;31) ein geschlossenes gerades Hohlprofil ist, in dessen Innerem der Schieber (15) geführt ist, welches Hohlprofil an seiner von vorne sichtbaren Seite mindestens einen Schlitz (23) aufweist, durch den hindurch der nach vorne abstehende Teil (17) mit dem Schieber (16) fest verbunden ist, wobei der Schlitz (23) den Anschlag (24) bildet.

5. Abweisvorrichtung nach Anspruch 1, **dadurch gekennzeichnet, dass** der Abweiser (11;31) mittels einer Strebe (13) an einem Träger (2,3,3') abgestützt ist, welche Strebe sich bei Erreichen einer bestimmten Stoßkraft verformt.

6. Abweisvorrichtung nach Anspruch 1, **dadurch gekennzeichnet, dass** der vom Abweisschuh (15) nach vorne abstehende Teil ein Absatz (17) ist, der von dem äusseren Ende des Abweisers (11; 31) nach der Fahrzeugmitte hin versetzt ist.

7. Abweisvorrichtung nach Anspruch 6, **dadurch gekennzeichnet, dass** der Absatz (17) des Abweisschuhs (15) stauchbar ist.

8. Abweisvorrichtung nach Anspruch 1, **dadurch gekennzeichnet, dass** der nach vorne abstehende Teil ein Bügel (18) ist, der am äusseren Ende des Abweisers (11; 31) befestigt ist und sich bis ungefähr über den Bereich des Vorderrades (4) nach der Fahrzeugmitte hin erstreckt.

9. Abweisvorrichtung nach Anspruch 8, **dadurch gekennzeichnet, dass** der Bügel (18) bis zu einem vorne abstehenden Absatz (17) reicht, der von dem äusseren Ende des Abweisers (11; 31) nach der Fahrzeugmitte hin versetzt ist.

10. Abweisvorrichtung nach Anspruch 1, **dadurch gekennzeichnet, dass** der am Abweisschuh (15) angebrachte nach vorne abstehende Teil eine Schubstange (19) ist, deren vorderes Ende (25) an oder in der Frontverkleidung (5) des Fahrzeuges ist.

11. Abweisvorrichtung nach Anspruch 10, **dadurch gekennzeichnet, dass** die Schubstange (19) am Absatz (17) befestigt ist, wobei das vordere Ende der Schubstange der Fahrzeugmitte näher als der Absatz ist.

12. Abweisvorrichtung nach Anspruch 1, **dadurch gekennzeichnet, dass** der Abweiser (31) Glied einer geschlossenen kinematischen Kette (2,31,32,34) ist und **dadurch** bei Einwirkung eines frontalen Stoßes rückwärts schwenkt und sich nach der Aussenseite des Fahrzeuges hin verlagert.

13. Abweisvorrichtung nach Anspruch 12, **dadurch gekennzeichnet, dass** die kinematische Kette ein Schubkurbelgetriebe ist, das aus dem Abweiser (31), einem um ein erstes Lager (35) am Träger (2) schwenkbaren Schwingarm (34) und aus einer Schwenkschiebeführung (32) für den Abweiser (31) besteht, wobei der Abweiser (31) in einem Punkt (36) zwischen seinem äusseren Ende und der Schiebeführung (32) mit dem Schwingarm (34) gelenkig verbunden ist.

14. Abweisvorrichtung nach Anspruch 10, **dadurch gekennzeichnet, dass** die Schwenkschiebeführung (32) mittels eines zweiten Lagers (33) mit dem Träger (2) verbunden ist.

## Claims

1. Deflector device for partially overlapping frontal collision of motor vehicles, the front part of the chassis of which comprises beams (2, 3, 3'), which deflector device is arranged in front of a front wheel (4) and is formed by a deflector that is connected to a beam and projects in a substantially horizontal manner and backward at an angle to protect said front wheel in the case of a collision, the deflector (11; 31) having a deflection element (15) guided on it longitudinally displaceably from a rest position to an operational position, the deflection element (15) comprising a slider (16), guided on or in the deflector (11; 31), **characterized in that** the deflection element further comprises a part (17; 18; 19) protruding forward from said slider.

2. Deflector device according to Claim 1, **characterized in that** the deflector (11; 31) is a straight hollow profile and forms an included angle of 40 to 70, preferably 45 to 60, angular degrees with a longitudinal beam (2).

3. Deflector device according to Claim 1, **characterized in that**, in its rest position, the slider (16) of the deflection element (15) is located entirely inside the deflector (11; 31) and its operational position is determined by a stop (24) on the deflector (11; 31).

4. Deflector device according to Claim 3, **characterized in that** the deflector (11; 31) is a closed straight hollow profile, in the interior of which the slider (16) is guided, which hollow profile has on its side that is visible from the front at least one slit (23), through which the forward projecting part (17) is firmly connected to the slider (16), the slit (23) forming the stop (24).

5. Deflector device according to Claim 1, **characterized in that** the deflector (11; 31) is supported on a beam (2, 3, 3') by means of a strut (13), which strut deforms when a certain impact force is reached.

6. Deflector device according to Claim 1, **characterized in that** the part projecting forward from the deflection element (15) is a shoulder (17), which is offset from the outer end of the deflector (11; 31) toward the middle of the vehicle.

7. Deflector device according to Claim 6, **characterized in that** the shoulder (17) of the deflection element (15) is compressible.

8. Deflector device according to Claim 1, **characterized in that** the forward projecting part is a bracket (18), which is fastened to the outer end of the deflector (11; 31) and extends toward the middle of the vehicle, to approximately in front of the region of the front wheel (4).

9. Deflector device according to Claim 8, **characterized in that** the bracket (18) reaches as far as a forward projecting shoulder (17), which is offset toward the middle of the vehicle from the outer end of the deflector (11; 31).

10. Deflector device according to Claim 1, **characterized in that** the forward projecting part attached to the deflection element (15) is a push rod (19), the front end (25) of which is on or in the front cowling (5) of the vehicle.

11. Deflector device according to Claim 10, **characterized in that** the push rod (19) is fastened to the shoulder (17), the front end of the push rod being closer to the middle of the vehicle than the shoulder.

12. Deflector device according to Claim 1, **characterized in that** the deflector (31) is a link of a closed kinematic chain (2, 31, 32, 34) and, as a result, pivots backward under the effect of a frontal impact and is displaced toward the outer side of the vehicle.

13. Deflector device according to Claim 12, **characterized in that** the kinematic chain is a slider-crank mechanism, which comprises the deflector (31), a rocker arm (34), which can pivot about a first bearing (35) on the beam (2), and a pivoting-sliding guide (32) for the deflector (31), the deflector (31) being connected at a point (36) between its outer end and the sliding guide (32) to the rocker arm (34) in an articulated manner.

14. Deflector device according to Claim 10, **characterized in that** the pivoting-sliding guide (32) is connected to the beam (2) by means of a second bearing (33).

## Revendications

1. Dispositif déflecteur intervenant en cas de collision frontale à recouvrement partiel pour véhicules automobiles, dont l'avant présente des supports (2, 3, 3'), dispositif déflecteur qui est disposé devant une roue avant (4) et qui est formé par un déflecteur attaché à un support et saillant essentiellement à l'horizontale et en oblique vers l'arrière, qui protège la roue avant en cas de collision, dans lequel un sabot déflecteur (15) est guidé de façon coulissante en direction longitudinale sur le déflecteur (11; 31) d'une position de repos à une position active, le sabot déflecteur (15) se composant d'un coulisseau (16) guidé sur ou dans le déflecteur (11; 31), **caractérisé en ce que** le sabot déflecteur se compose en outre d'une pièce (17; 18; 19) saillant vers l'avant à partir de celui-ci.

2. Dispositif déflecteur selon la revendication 1, **caractérisé en ce que** le déflecteur (11; 31) est un profilé creux rectiligne et forme avec un support longitudinal (2) un angle de 40 à 70, de préférence de 45 à 60 degrés.

3. Dispositif déflecteur selon la revendication 1, **caractérisé en ce que** le coulisseau (16) du sabot déflecteur (15) se trouve en position de repos entièrement à l'intérieur du déflecteur (11; 31) et sa position active est déterminée par une butée (24) sur le déflecteur (11; 31).

4. Dispositif déflecteur selon la revendication 3, **caractérisé en ce que** le déflecteur (11; 31) est un profilé creux rectiligne fermé, à l'intérieur duquel le coulisseau (16) est guidé, profilé creux qui présente sur son côté visible vers l'avant au moins une fente (23), à travers laquelle la pièce saillant vers l'avant (17) est solidaire du coulisseau (16), la fente (23) formant ainsi la butée (24).

5. Dispositif déflecteur selon la revendication 1, **caractérisé en ce que** le déflecteur (11; 31) est appuyé sur un support (2, 3, 3') à l'aide d'une entretoise (13), qui se déforme lorsque la force du choc atteint un niveau déterminé.

6. Dispositif déflecteur selon la revendication 1, **caractérisé en ce que** la pièce saillant vers l'avant à partir du sabot déflecteur (15) est un épaulement (17), qui est décalé vers le milieu du véhicule à partir de l'extrémité extérieure du déflecteur (11; 31).

7. Dispositif déflecteur selon la revendication 6, **caractérisé en ce que** l'épaulement (17) du sabot déflecteur (15) peut être refoulé.

8. Dispositif déflecteur selon la revendication 1, **caractérisé en ce que** la pièce saillant vers l'avant est un étrier (18), qui est fixé à l'extrémité extérieure du déflecteur (11; 31) et qui s'étend en direction du milieu du véhicule jusqu'environ au-delà de la région de la roue avant (4).

9. Dispositif déflecteur selon la revendication 8, **caractérisé en ce que** l'étrier (18) s'étend jusqu'à un épaulement (17) saillant vers l'avant, qui est décalé en direction du milieu du véhicule à partir de l'extrémité extérieure du déflecteur (11; 31).

10. Dispositif déflecteur selon la revendication 1, **caractérisé en ce que** la pièce saillant vers l'avant montée sur le sabot déflecteur (15) est une bielle (19), dont l'extrémité avant (25) est située sur ou dans le capot avant (5) du véhicule.

11. Dispositif déflecteur selon la revendication 10, **caractérisé en ce que** la bielle (19) est fixée à l'épaulement (17), l'extrémité avant de la bielle étant plus proche du milieu du véhicule que l'épaulement.

12. Dispositif déflecteur selon la revendication 1, **caractérisé en ce que** le déflecteur (31) est un élément d'une chaîne cinématique fermée (2, 31, 32, 34) et de ce fait pivote vers l'arrière et se déplace vers le côté extérieur du véhicule sous l'effet d'un choc frontal.

13. Dispositif déflecteur selon la revendication 12, **caractérisé en ce que** la chaîne cinématique est un mécanisme bielle-manivelle, qui se compose du déflecteur (31), d'un bras oscillant (34) pivotant sur le support (2) autour d'un premier palier (35) et d'un guide coulissant pivotant (32) pour le déflecteur (31), le déflecteur (31) étant articulé au bras oscillant (34) en un point (36) entre son extrémité extérieure et le guide coulissant (32).

14. Dispositif déflecteur selon la revendication 10, **caractérisé en ce que** le guide coulissant pivotant (32) est relié au support (2) au moyen d'un second palier (33).
